(19)

Europäisches
Patentamt

European
Patent Office

Office européen
des brevets

(11) **EP 4 482 096 A1**

(12) **EUROPEAN PATENT APPLICATION**

(43) Date of publication:
**25.12.2024 Bulletin 2024/52**

(21) Application number: **24177213.6**

(22) Date of filing: **22.05.2024**

(51) International Patent Classification (IPC):
**H04L 27/26** (2006.01)   **H04L 25/03** (2006.01)
**H04L 25/06** (2006.01)

(52) Cooperative Patent Classification (CPC):
**H04L 27/26025; H04L 25/03159; H04L 25/03343;
H04L 25/03834; H04L 25/068; H04L 27/2614;
H04L 27/2636; H04L 27/264; H04L 27/2644;
H04L 27/26526; H04L 27/26534; H04L 27/26546**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023   US 202363521496 P
21.02.2024   US 202418583806**

(71) Applicant: **Samsung Electronics Co., Ltd.
Suwon-si, Gyeonggi-do 16677 (KR)**

(72) Inventors:
• **Rostami, Soheil
California, 94043 (US)**
• **Cho, Joonyoung
California, 94043 (US)**
• **Wan, Heping
California, 94043 (US)**

(74) Representative: **Gulde & Partner
Patent- und Rechtsanwaltskanzlei mbB
Wallstraße 58/59
10179 Berlin (DE)**

(54) **TRANSMISSION OF FASTER THAN NYQUIST SIGNALING**

(57)    The present disclosure relates to a 5G communication system or a 6G communication system for supporting higher data rates beyond a 4G communication system such as long term evolution (LTE). Methods and apparatuses for UE initiated reporting in a wireless communication system. A method of operating a UE includes: transmitting UE capability information supporting a FTN; generating data modulation symbols including a set of zero symbols, wherein the data modulation symbols are up-sampled or zero-padded; performing, to obtain DFT output signal, a DFT spread operation on the up-sampled or the zero-padded data modulation symbols; performing, based on a target FTN compression rate and a SC allocation, a discarding or a down sampling operation on the DFT output signal, wherein the discarding or the down sampling operation generates a subset of DFT symbols; mapping the subset of DFT symbols to a set of SCs; and performing an IFFT operation on the subset of DFT symbols to obtain an FTN-DFT-S-OFDM signal including the target FTN compression rate comprising a positive rational number smaller than one.

[Fig. 8]

**Description**

**TECHNICAL FIELD**

The present disclosure relates generally to wireless communication systems and, more specifically, the present disclosure relates to a transmission of faster than Nyquist (FTN) signaling in a wireless communication system.

**BACKGROUND**

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100$\mu$sec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

**SUMMARY**

The present disclosure relates to a transmission of FTN signaling in a wireless communication system.

In one embodiment, a user equipment (UE) in a wireless communication system is provided. The UE comprises a transceiver configured to transmit UE capability information indicating the UE is capable of supporting a FTN. The UE further includes a processor operably coupled to the transceiver, the processor configured to: generate data modulation symbols including a set of zero symbols, wherein the data modulation symbols are up-sampled or zero-padded; perform, to obtain DFT output signal, a discrete Fourier transform (DFT) spread operation on the up-sampled data modulation symbols or the zero-padded data modulation symbols; perform, based on (i) a target FTN compression rate and (ii) a subcarrier (SC) allocation, a discarding operation or a down sampling operation on the DFT output signal, wherein the discarding operation or the down sampling operation generates a subset of DFT symbols; map the subset of DFT symbols to a set of SCs corresponding to a transmission bandwidth; and perform an inverse fast Fourier transform (IFFT) operation on the subset of DFT symbols to obtain an FTN-DFT spread orthogonal frequency division multiplexing (FTN-DFT-S-OFDM) signal, wherein the FTN-DFT-S-OFDM signal includes the target FTN compression rate comprising a positive rational number smaller than one.

In another embodiment, a method of a UE in a wireless communication system is provided. The method comprises: transmitting UE capability information indicating the UE is capable of supporting an FTN; generating data modulation symbols including a set of zero symbols, wherein the data modulation symbols are up-sampled or zero-padded; performing, to obtain DFT output signal, a DFT spread operation on the up-sampled data modulation symbols or the zero-padded data modulation symbols; performing, based on (i) a target FTN compression rate and (ii) a SC allocation, a discarding operation or a down sampling operation on the DFT output signal, wherein the discarding operation or the down sampling operation generates a subset of DFT symbols; mapping the subset of DFT symbols to a set of SCs corresponding to a transmission bandwidth; and performing an IFFT operation on the subset of DFT symbols to obtain an FTN-DFT-S-OFDM signal, wherein the FTN-DFT-S-OFDM signal includes the target FTN compression rate comprising a positive rational number smaller than one.

In yet another embodiment, a base station (BS) in a wireless communication system is provided. The BS comprises a processor. The BS further comprises a transceiver operably coupled to the processor, the transceiver configured to receive, from a UE, UE capability information indicating the UE is capable of supporting a FTN, wherein: data modulation symbols including a set of zero symbols is generated, the data modulation symbols being up-sampled or zero-padded; a DFT spread operation is performed to obtain DFT output signal on the up-sampled data modulation symbols or the zero-padded data modulation symbols; based on (i) a target FTN compression rate and (ii) a SC allocation, a discarding operation or a down sampling operation is performed on the DFT output signal, the discarding operation or the down sampling operation generating a subset of DFT symbols; the subset of DFT symbols is mapped to a set of SCs corresponding to a transmission bandwidth; and an IFFT operation is performed on the subset of DFT symbols to obtain an FTN-DFT-S-OFDM signal, wherein the FTN-DFT-S-OFDM signal including the target FTN compression rate comprising a positive rational number smaller than one.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example of wireless network according to embodiments of the present disclosure;
FIGURE 2 illustrates an example of gNB according to embodiments of the present disclosure;
FIGURE 3 illustrates an example of UE according to embodiments of the present disclosure;
FIGURES 4 and 5 illustrate example of wireless transmit and receive paths according to this disclosure;
FIGURE 6 illustrates a flowchart of a method for FTN-DFT-S-OFDM to generate FTN based DFT-S-OFDM according to embodiments of the present disclosure;
FIGURE 7 illustrates an example of Tx architecture for FTN-DFT-S-OFDM according to embodiments of the present disclosure;
FIGURE 8 illustrates an example of Normalized signal of x(n) corresponding to data modulation symbol 0 and symbol 1 according to embodiments of the present disclosure;
FIGURE 9 illustrates examples of Rx Architecture for FTN-DFT-S-OFDM according to embodiments of the present disclosure;
FIGURE 10 illustrates examples of mixed-FTN-DFT-S-OFDM slot structure according to embodiments of the present disclosure;
FIGURE 11 illustrates examples of all-FTN-DFT-S-OFDM slot structure according to embodiments of the present disclosure;
FIGURE 12 illustrates examples of time-windowing of edge FTN symbols with index 3 and 10 for mixed-FTN-DFT-S-OFDM slot structure according to embodiments of the present disclosure;
FIGURE 13 illustrates examples of time-windowing of adjacent FTN symbols with index 2, 4, 9 and 11 for all-FTN-DFT-S-OFDM slot structure according to embodiments of the present disclosure;
FIGURE 14 illustrates a flowchart of a method for variation of FTN-DFT-S-OFDM to generate FTN based DFT-S-OFDM based on zero padding operation according to embodiments of the present disclosure;
FIGURE 15 illustrates examples of variation of Tx architecture of FTN-DFT-S-OFDM based on zero padding operation according to embodiments of the present disclosure;
FIGURE 16 illustrates a flowchart of a method for variation of FTN-DFT-S-OFDM to generate FTN based DFT-S-OFDM based on distributed subcarrier mapping according to embodiments of the present disclosure;
FIGURE 17 illustrates examples of variation of Tx architecture of FTN-DFT-S-OFDM based on distributed subcarrier mapping according to embodiments of the present disclosure;
FIGURE 18 illustrates an example of instantaneous PAPR CCDFs for QPSK/6RB without FDSS for FTN-DFT-S-OFDM and DFT-S-OFDM according to embodiments of the present disclosure; and
FIGURE 19 illustrates a flowchart of a method for according to embodiments of the present disclosure.

## DETAILED DESCRIPTION

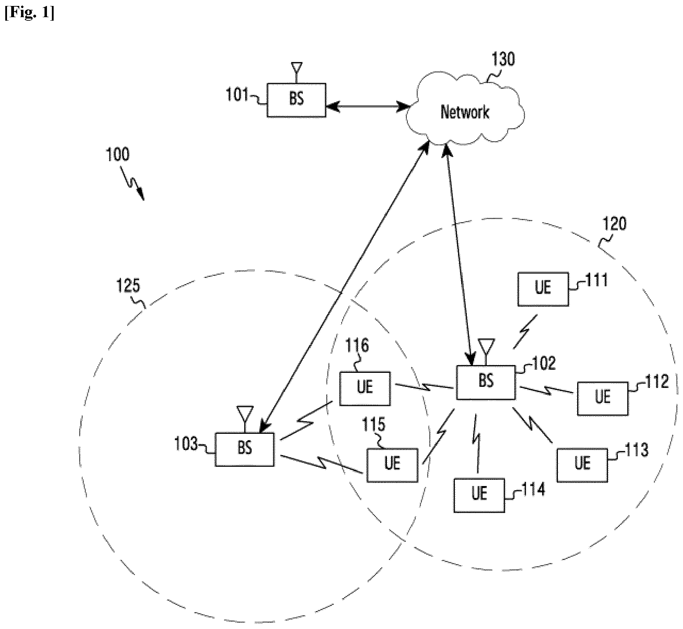

FIGURE 1 through FIGURE 19, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

To meet the demand for wireless data traffic having increased since deployment of 4G communication systems and to enable various vertical applications, 5G/NR communication systems have been developed and are currently being deployed. The 5G/NR communication system is considered to be implemented in higher frequency (mmWave) bands, e.g., 28 GHz or 60 GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G/NR communication systems.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancelation and the like.

The discussion of 5G systems and frequency bands associated therewith is for reference as certain embodiments of the present disclosure may be implemented in 5G systems. However, the present disclosure is not limited to 5G systems, or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise; a UE 113, which may be a WiFi hotspot; a UE 114, which may be located in a first residence; a UE 115, which may be located in a second residence; and a UE 116, which may be a mobile device, such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3rd generation partnership project (3GPP) NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof, for a transmission of faster than Nyquist signaling in a wireless communication system. In certain embodiments, and one or more of the gNBs 101-103 includes circuitry, programing, or a combination thereof, for supporting a transmission of faster than Nyquist signaling in a wireless communication system.

Although FIGURE 1 illustrates one example of a wireless network, various changes may be made to FIGURE 1. For example, the wireless network could include any number of gNBs and any number of UEs in any suitable arrangement.

Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

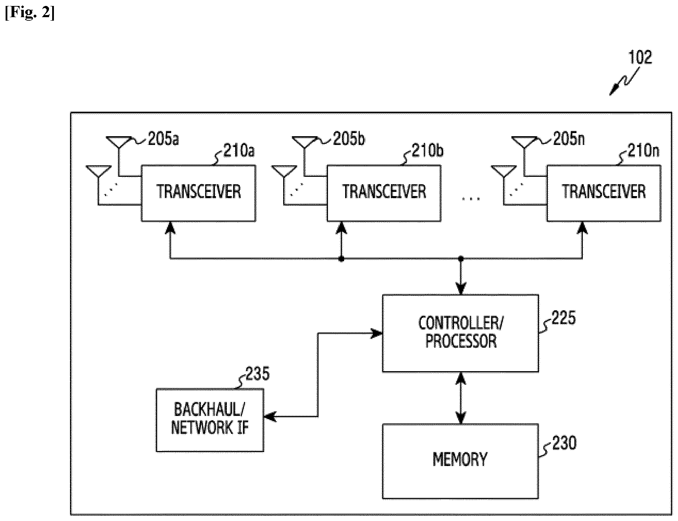

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple transceivers 210a-210n, a controller/processor 225, a memory 230, and a backhaul or network interface 235.

The transceivers 210a-210n receive, from the antennas 205a-205n, incoming RF signals, such as signals transmitted by UEs in the network 100. The transceivers 210a-210n down-convert the incoming RF signals to generate IF or baseband signals. The IF or baseband signals are processed by receive (RX) processing circuitry in the transceivers 210a-210n and/or controller/processor 225, which generates processed baseband signals by filtering, decoding, and/or digitizing the baseband or IF signals. The controller/processor 225 may further process the baseband signals.

Transmit (TX) processing circuitry in the transceivers 210a-210n and/or controller/processor 225 receives analog or digital data (such as voice data, web data, e-mail, or interactive video game data) from the controller/processor 225. The TX processing circuitry encodes, multiplexes, and/or digitizes the outgoing baseband data to generate processed baseband or IF signals. The transceivers 210a-210n up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of UL channel signals and the transmission of DL channel signals by the transceivers 210a-210n in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as processes for supporting a transmission of faster than Nyquist signaling in a wireless communication system. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. Also, various components in FIGURE 2 could be combined, further subdivided, or omitted and additional components could be added according to particular needs.

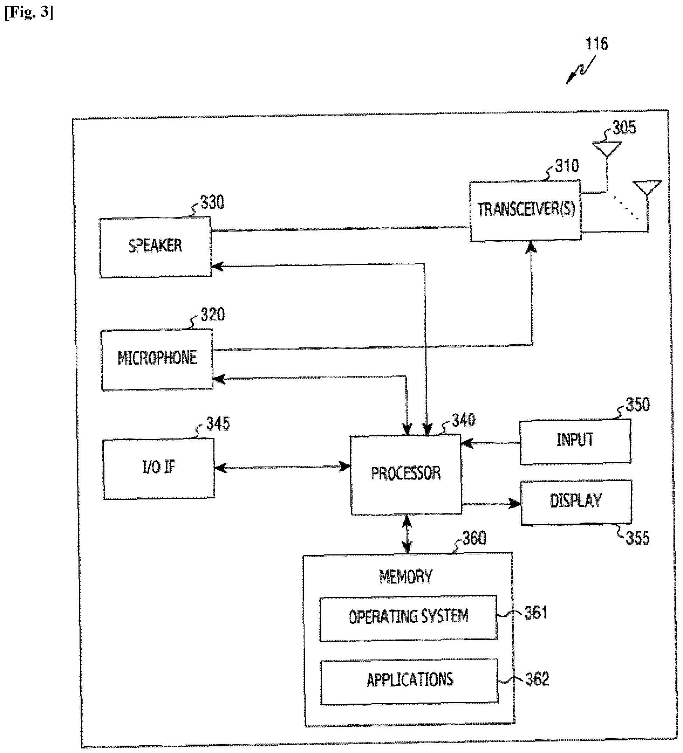

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes antenna(s) 305, a transceiver(s) 310, and a microphone 320. The UE 116 also includes a speaker 330, a processor 340, an input/output (I/O) interface (IF) 345, an input 350, a display 355, and a memory 360. The memory 360 includes an operating system (OS) 361 and one or more applications 362.

The transceiver(s) 310 receives from the antenna 305, an incoming RF signal transmitted by a gNB of the network 100. The transceiver(s) 310 down-converts the incoming RF signal to generate an intermediate frequency (IF) or baseband signal. The IF or baseband signal is processed by RX processing circuitry in the transceiver(s) 310 and/or processor 340, which generates a processed baseband signal by filtering, decoding, and/or digitizing the baseband or IF signal. The RX processing circuitry sends the processed baseband signal to the speaker 330 (such as for voice data) or is processed by the processor 340 (such as for web browsing data).

TX processing circuitry in the transceiver(s) 310 and/or processor 340 receives analog or digital voice data from the microphone 320 or other outgoing baseband data (such as web data, e-mail, or interactive video game data) from the processor 340. The TX processing circuitry encodes, multiplexes, and/or digitizes the outgoing baseband data to generate a processed baseband or IF signal. The transceiver(s) 310 up-converts the baseband or IF signal to an RF signal that is transmitted via the antenna(s) 305.

The processor 340 can include one or more processors or other processing devices and execute the OS 361 stored in the memory 360 in order to control the overall operation of the UE 116. For example, the processor 340 could control the reception of DL channel signals and the transmission of UL channel signals by the transceiver(s) 310 in accordance with well-known principles. In some embodiments, the processor 340 includes at least one microprocessor or microcontroller.

The processor 340 is also capable of executing other processes and programs resident in the memory 360, such as processes for transmission of faster than Nyquist signaling in a wireless communication system.

The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the input 350 and the display 355 which includes for example, a touchscreen, keypad, etc., The operator of the UE 116 can use the input 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random-access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). In another example, the transceiver(s) 310 may include any number of transceivers and signal processing chains and may be connected to any number of antennas. Also, while FIGURE 3 illustrates the UE 116 configured as a mobile telephone or smartphone, UEs could be configured to operate as other types of mobile or stationary devices.

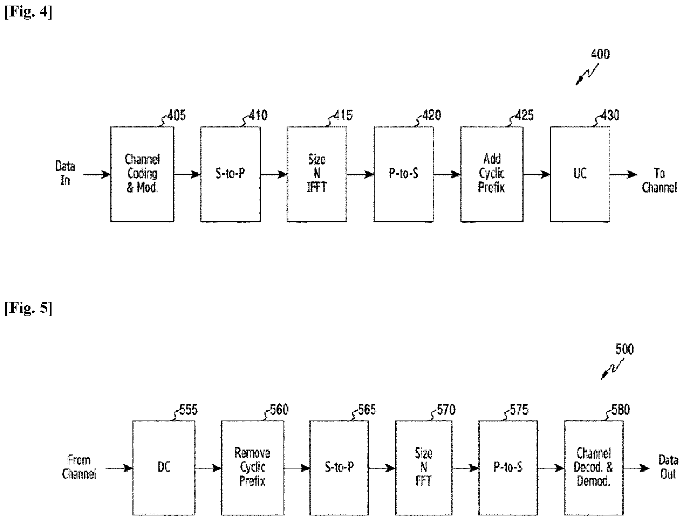

FIGURE 4 and FIGURE 5 illustrate example wireless transmit and receive paths according to this disclosure. In the following description, a transmit path 400 may be described as being implemented in a gNB (such as the gNB 102), while a receive path 500 may be described as being implemented in a UE (such as a UE 116). However, it may be understood that the receive path 500 can be implemented in a gNB and that the transmit path 400 can be implemented in a UE. In some embodiments, the receive path 500 is configured to support a transmission of faster than Nyquist signaling in a wireless communication system.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols.

The serial-to-parallel block 410 converts (such as de-multiplexes) the serial modulated symbols to parallel data in order to generate N parallel symbol streams, where N is the IFFT/FFT size used in the gNB 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the gNB 102 arrives at the UE 116 after passing through the wireless channel, and reverse operations to those at the gNB 102 are performed at the UE 116.

As illustrated in FIGURE 5, the down converter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the gNBs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the gNBs 101-103 and may implement the receive path 500 for receiving in the downlink from the gNBs 101-103.

Each of the components in FIGURE 4 and FIGURE 5 can be implemented using only hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 415 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

Discrete Fourier transform spreading OFDM (DFT-s-OFDM) is a single carrier waveform with low PAPR and could be a promising candidate waveform for B5G and 6G systems. Improving PAPR and spectral efficiency (SE) of DFT-s-OFDM may help with high data rate requirement of B5G and 6G systems.

FTN signaling increases the signaling rate of Sinc pulses by 25% and does not affect the minimum distance between binary coded codewords, which allows to increase the data rates without affecting the probability of error when using an optimum receiver. Constrained theoretical information rates of FTN provides that FTN is beneficial from an information theoretic perspective. As FTN signaling causes inter-symbol interference (ISI), achieving the full gains of theoretical rates may require higher-complexity receivers.

The FTN signaling was extended from single carrier to multicarrier and is combined with OFDM and is considered as a promising candidate waveform for next-generation communications systems.

The discrete Fourier transform-spread-OFDM (DFT-s-OFDM) has been adopted and commercialized as a key uplink waveform for the 3GPP 4G/5G mobile communication systems and widely regarded as the baseline waveform of B5G/6G systems. The DFT-S-OFDM achieves lower PAPR compared to OFDM and reduces power consumption and increase the coverage range.

To address the anticipated increase in wireless data traffic, the spectrally-efficient waveform is a key enabler. Conventionally, to boost the spectral efficiency (SE), higher-order modulation can be applied at the cost of larger PAPR, which makes reducing PAPR and enhancing SE contradictory. DFT-S-OFDM cannot improve the SE, whereas there are different PAPR reduction techniques for DFT-S-OFDM (such techniques may introduce signal distortion and sacrifice SE).

One way to enhance the SE of a waveform (e.g., DFT-S-OFDM), is to apply FTN signaling by increasing symbol rate while accepting additional inter-symbol interference (ISI). On the other hand, FTN may degrade symbol error rate (SER) and may increase Rx complexity. The disclosure is to introduce a waveform based on combining FTN and DFT-S-OFDM, which can enable to achieve higher SE and lower PAPR.

Reference signals (RS) can be utilized for coherent signal detection and channel estimation in FTN scenarios. The challenge is how to embed RS symbols with FTN symbols to support 4G/5G frame/subframe structure with backward compatibility. The disclosure introduces slot structure which can be incorporated into 4G/5G subframe/frame structure for the provided waveform. Therefore, the conventional DFT-S-OFDM enabled transceiver may transmit/receive such FTN waveform without compromising the original architecture of DFT-S-OFDM.

Finally, design flexibility on selecting FTN compression rates provides new degrees of freedom for the waveform to achieve different levels of SE. The specific set of feasible FTN compression rates for the waveform to support different numerologies and number of resource blocks (RBs) are explained in the present disclosure.

The present disclosure is related to a modification of DFT-S-OFDM to enhance SE and PAPR simultaneously, by incorporating FTN signaling to DFT-s-OFDM (FTN-DFT-S-OFDM). The FTN-DFT-S-OFDM enables the synthesis of block-based single carrier waveforms with various FTN compression rates and bandwidths (number of RBs) by up-sampling input data symbols and changing the size of the DFT-spread block. FTN-DFT-S-OFDM offers flexibility in slot design, and it is a backward compatible with 4G/5G subframe/frame structure. Moreover, frequency domain pulse shaping could be utilized as an enabling technique for FTN-DFT-S-OFDM to strike better SER, PAPR, SE, and complexity.

Additionally, different slot structures for FTN-DFT-S-OFDM to transmit reference signals (RS) is introduced to combine none-FTN RS symbols with FTN data symbols and/or with none-FTN data symbols. The Tx may encode the FTN-DFT-S-OFDM data symbols for transmission to the Rx in a subframe. Furthermore, a method for configuring FTN compression rates based on different numerology is disclosed.

Low implementation complexity and small modification of original architecture of DFT-S-OFDM, backward compatibility of subframe/frame structure can make FTN-DFT-S-OFDM a waveform candidate for B5G and 6G systems.

In one embodiment of the present disclosure, Tx (e.g., UE) utilizes up-sampling, DFT spreading and discarding operation to generate FTN signal and leverages the architecture of DFT-S-OFDM to configure different FTN compression rates flexibly.

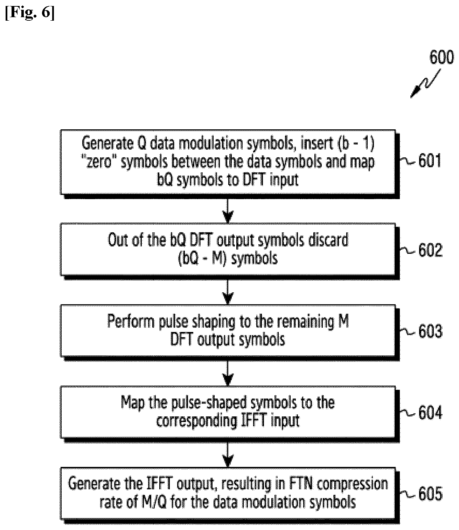

FIGURE 6 illustrates a flowchart of a method 600 for FTN-DFT-S-OFDM to generate FTN based DFT-S-OFDM according to embodiments of the present disclosure. The method 600 as may be performed by a UE (e.g., 111-116 as illustrated in FIGURE 1). An embodiment of the method 600 shown in FIGURE 6 is for illustration only. One or more of the components illustrated in FIGURE 6 can be implemented in specialized circuitry configured to perform the noted functions or one or more of the components can be implemented by one or more processors executing instructions to perform the noted functions.

FIGURE 6 illustrates a flowchart for a process 600 including an example of operations at Tx side to support FTN based DFT-S-OFDM. For example, the process 600 may be implemented using a transmit path, such as transmit path 400, in a UE, such as UE 116. An embodiment of the process 600 shown in FIGURE 6 is for illustration only.

In one embodiment, at operation 601, the $Q$ data modulation symbols are up-sampled by a factor of $b$ and the $bQ$ up-sampled symbols are DFT spread.

At operation 602, first $M$ DFT outputs is selected and are mapped to the sub-carriers corresponding to the assigned transmission bandwidth.

At operation 603, the frequency domain pulse/spectrum shaping (FDSS) can be applied on the $M$ DFT outputs and can be mapped to the corresponding subcarriers as input of IFFT.

At operation 604, the IFFT operation is performed; resulting in FTN compression rate of $\tau = M/Q$ for the data modulation symbols.

Tx circuitry such as channel coding for data bits, cyclic prefix addition, digital-to-analog converter, analog filters, amplifiers, and transmitter antennas are not illustrated in the disclosure as they are well known in the art and are omitted for brevity.

FTN compression rate ($\tau = M/Q$) is a positive rational number smaller than one, and can be expressed as an irreducible fraction $\tau = \frac{\tau_{num}}{\tau_{den}}$ where $\tau_{num}$ and $\tau_{den}$ may be co-prime positive integers. Then $b$ can be chosen as any positive multiple factor of $\tau_{num}$ to flexibly accommodate the desired DFT implementations constraints. In one design example, to have smaller DFT size, $b$ can be assumed equal to $\tau_{num}$, i.e., $b = \tau_{num}$.

In case of $M = Q$ ($\tau = 1$ or $b=1$, i.e., no up-sampling and discarding may be performed), FTN-DFT-S-OFDM can become equivalent to 4G/5G DFT-S-OFDM. In other words, FTN-DFT-S-OFDM is more general version of DFT-S-OFDM.

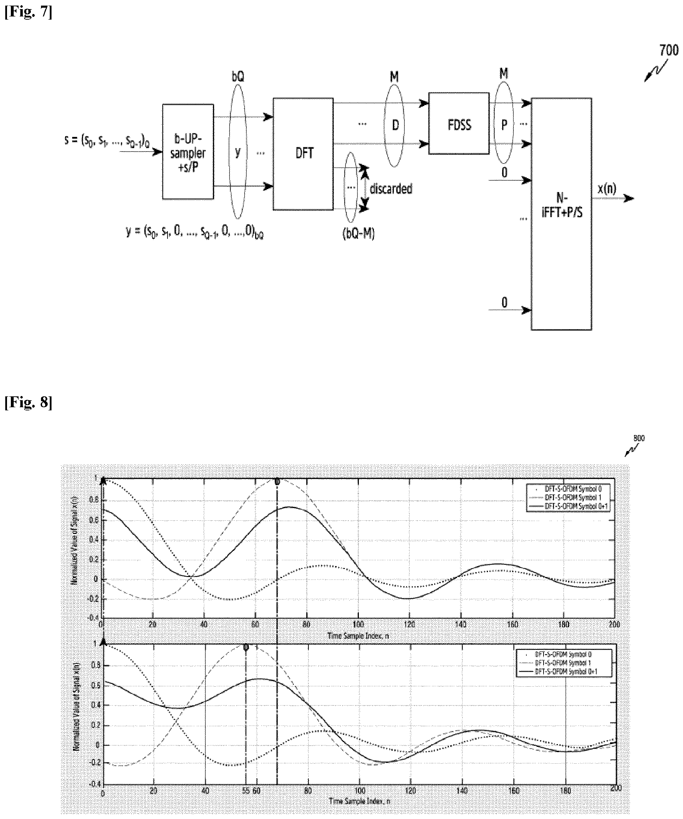

FIGURE 7 illustrates an example of Tx architecture for FTN-DFT-S-OFDM 700 according to embodiments of the present disclosure. An embodiment of the Tx architecture for FTN-DFT-S-OFDM 700 shown in FIGURE 7 is for illustration only.

FIGURE 7 is an example of signal processing block diagram at Tx side to generate FTN- DFT-S-OFDM. In following, it can be shown that the output of IFFT (x(n)) can become equivalent to FTN signaling of DFT-S-OFDM. For brevity assumed the pulse shaping is Sinc pulse shape (i.e., no FDSS is applied).

Let's assume $Q$ modulation (e.g., QAM) data symbols are: $s = (S_0, S_1, ..., S_{Q-1})_Q$.

With some mathematical manipulation, it can be shown that M DFT outputs are,

$$P(k) = D(k) = \frac{1}{bQ} \sum_{q=0}^{Q-1} s_q e^{-jk\frac{2\pi q}{bQ}}, for\ 0 \le k \le M - 1.$$

And output of IFFT (with assumption that first $M$ input of $N$-IFFT are utilized for sub-carriers) can be modeled as single carrier transmission with overall pulse shape of $g(n)$, $x(n) = \frac{1}{bQ}\sum_{q=0}^{Q-1} s_q \cdot g\left(n - q\frac{N}{Q}\right)$, where

$$g(n) = \sum_{k=0}^{M-1} e^{jn\frac{2\pi k}{N}}.$$

Each symbol ($s_q$) is passed through $g(n)$ with a symbol-interval of $\frac{N}{Q}$. The signal $x(n)$ is then transmitted to the receiver over a channel after some common Tx operations.

The 4G/5G DFT-S-OFDM is considered as a baseline waveform, where its number of subcarriers equal to FTN-DFT-S-OFDM, $M_{DFT-S-OFDM} = M$ and its number of input symbols is, $Q_{DFT-S-OFDM} = M$. Let's refer to DFT-S-OFDM's output signal as $x_{DFT-s-OFDM}(n)$ which is a Nyquist signal with symbol time of $N/M$.

$$x_{DFT-s-OFDM}(n) = \frac{1}{M} \sum_{q=0}^{M-1} s_q \cdot g\left(n - q\frac{N}{M}\right).$$

However, FTN signal $x(n)$ has smaller symbol time $\frac{N}{Q} < \frac{N}{M}$ (as $Q > M$) than DFT-S-OFDM for same pulse shape $g(n)$ (which is orthogonal with respect to shifts by $q\frac{N}{M}$). Therefore, symbol rate for $x(n)$ becomes $1/\tau = Q/M$ times higher than that $x_{DFT-s-OFDM}(n)$ leading to higher SE. In other words, with FTN-DFT-S-OFDM, SE is improved by multiplexing more data symbols compared to DFT-S-OFDM with same number of subcarriers. The orthogonality is no longer maintained between consecutive symbols in the FTN system due to the artificially induced ISI during transmission. Thus, FTN transmission achieves higher SE at the cost of some ISI.

FIGURE 8 illustrates an example of normalized signal of x(n) 800 corresponding to data modulation symbol 0 and symbol 1 according to embodiments of the present disclosure. An embodiment of the normalized signal of x(n) 800 shown in FIGURE 8 is for illustration only.

To illustrate the waveform shape of FTN-DFT-S-OFDM and DFT-S-OFDM, IFFT output of both architectures are illustrated in FIGURE 8 for three different scenarios/examples (with assumption of $Q = 74$, $M = 60$, $Q_{DFT-s-OFDM} = 60$, $M_{DFT-S-OFDM} = 60$, $N = N_{DFT-s-OFDM} = 4096$):

- Symbol 0: $\boldsymbol{s} = (s_0, 0, \ldots, 0)_Q$;
- Symbol 1: $\boldsymbol{s} = (0, s_1, \ldots, 0)_Q$; and
- Symbol 0+1: $\boldsymbol{s} = (s_0, s_1, \ldots, 0)_Q$.

For illustration purposes, it is assumed that $s_0 = s_1$. As can be seen from FIGURE 8 top and bottom, pulse shapes for symbol 0 and symbol 1 are identical (except time shift); and symbol 0 (triangle) is sent at sample 0 for both FTN-DFT-S-OFDM and DFT-S-OFDM. However, symbol 1 (donut) is sent around $\frac{N}{M} = 68.2$ for DFT-S-OFDM while for FTN-DFT-S-OFDM, symbol 1 (donut) is sent earlier around $\frac{N}{Q} = 55.3$. In other words, symbol 1 for FTN-DFT-S-OFDM is sent quicker and symbol rate is increased with ratio of $1/\tau = Q/M = 1.23$ compared to DFT-S-OFDM. As from this example can be seen the peak value of symbol 0+1 (solid line) is smaller for FTN-DFT-S-OFDM compared to DFT-S-OFDM, leading to PAPR improvement for FTN-DFT-S-OFDM.

Similar to conventional FTN signaling, part of the data spectrum may be truncated due to signal processing operations 601 and 602 of FIGURE 6. This does not necessarily mean that the data are lost, as the increased symbol rate in FTN above the Nyquist limit can be exploited in time domain to add redundancies in the data to recover the lost spectrum by means of error control coding.

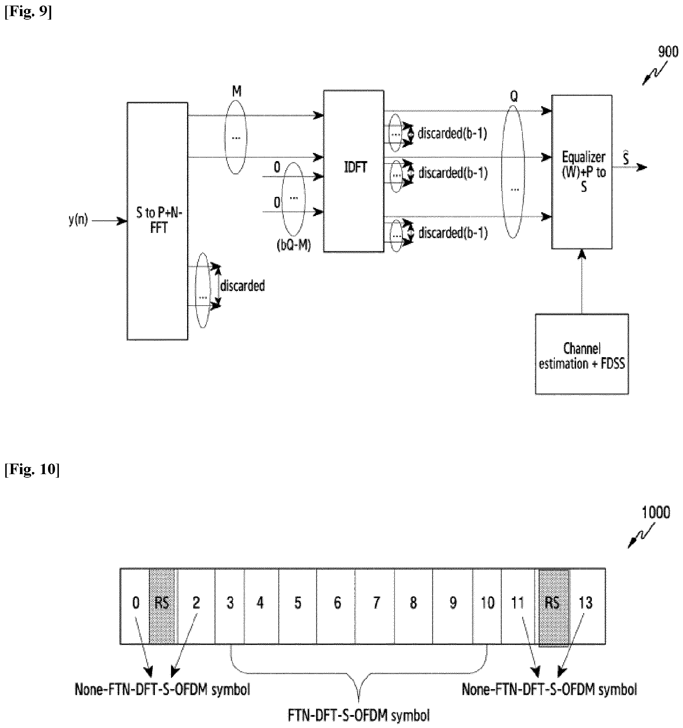

An exemplary block diagram of the Rx functions for FTN-DFT-S-OFDM is illustrated in FIGURE 9. At the Rx, the reverse operations of those illustrated in FIGURE 7 are performed. In this example, the generic low-complexity time-domain equalization-based method is utilized based on knowledge of channel estimation and Tx side FDSS.

FIGURE 9 illustrates examples of Rx architecture for FTN-DFT-S-OFDM 900 according to embodiments of the present disclosure. An embodiment of the Rx architecture for FTN-DFT-S-OFDM 900 shown in FIGURE 9 is for illustration only.

To reduce long DFT sizes ($bQ$), while allowing flexibility in the choice of $b$ values, the sum of multiple DFTs could be utilized, where $b$ identical DFT blocks each of length $Q$ instead of one large DFT block of length $bQ$. This may help with parallel computation and may reduce the computation time required for the DFT processing stage.

The above-mentioned embodiment and given variations are examples and not restrictive to the disclosure. Other variations are possible.

Besides SE improvement, FTN-DFT-s-OFDM could reduce PAPR levels for larger FTN compression rates; due to the non-orthogonality between pulse-shapes, the overlapping between sidelobes of pulse becomes lighter than that of DFT-s-OFDM. On the other hand, with further decrease of FTN compression rate, the overlapping between the main lobes of the adjacent pulses becomes larger leading to increased PAPR. Therefore, some lighter FTN compression rates could achieve the higher PAPR gains.

Rx's equalizer complexity and SER performance of FTN-DFT-S-OFDM could be worsen with the number of the interfering symbols. By incorporating FDSS that has more finite time domain response, lower FTN ISI and PAPR could be achieved compared to Sinc pulse shapes.

A UE may indicate the FTN feature support (and potentially a set of supported FTN compression rates) through UE capability information. Once gNB knows that the UE supports FTN feature, it may indicate the UE on whether to apply FTN signaling for downlink or uplink or both directions, using downlink control indicator (DCI) or medium access control element (MAC CE) or radio resource configuration (RRC) message. The gNB may indicate the exact FTN compression rate that UE could utilize it.

The transmission bandwidth per Tx/UE is assumed to include $i$ number of RBs (i.e., $i$ is a positive integer bigger or equal to one), where an exemplary embodiment assumes that each RB has 12 subcarriers and transmitters are allocated $i = M/12$ of consecutive or distributed RBs. Nevertheless, the above values are only illustrative and not restrictive to the embodiment.

As discussed in the present disclosure, no asymptotic error rate is lost by increasing the symbol rate 24.7% above the Nyquist limit, and hence the feasible FTN compression rates are restricted to satisfy the Mazo limit (i.e., $\frac{1-\tau}{\tau} < 0.247$) for case of no FDSS. With such condition, maximum number of symbols for FTN-DFT-S-OFDM can be calculated as

$$Q_{max} = \lfloor 1.247 * 12 * i \rfloor = \lfloor 14.964 * i \rfloor$$

where $\lfloor \ \rfloor$ is a floor function. Therefore, different feasible FTN compression rates can be achieved according to $\tau = M/Q$; and minimum FTN compression rate can be calculated as, $\tau_{min} = M/Q_{max}$.

In case that FDSS is utilized, the limitation may increase, and hence different FTN compression rates could be realized.

TABLE 1 illustrates the feasible FTN compression rates for different RB sizes for case of no FDSS. For any RB size, FTN compression rates of 12/13, 6/7 are feasible examples, achieving low SE and high SE. For any even size RB ($0 = i$ (mod 2) 24/25, 8/9, 24/29 could be applied. For any RB size that $0 = i$ (mod 3) following FTN compression rates could be examples of FTN compression rate 36/37, 18/19, 12/13, 9/10, 36/41, 6/7, 36/43, 8/11.

TABLE 1. Example of Feasible FTN compression Rates as function of number of RBs 1-5

| number of RBs = $i$ | Number of subcarriers = 12$i$ | Maximum number of symbols | FTN compression rate = number of symbols/number of subcarriers |
|---|---|---|---|
| 1 | 12 | 14 | 12/13, 6/7 |
| 2 | 24 | 29 | 24/25, 12/13, 8/9, 6/7, 24/29 |
| 3 | 36 | 44 | 36/37, 18/19, 12/13, 9/10, 36/41, 6/7, 36/43, 8/11 |
| 4 | 48 | 59 | 48/49, 24/25, 16/17, 12/13, 48/53, 8/9, 48/55, 6/7, 16/19, 24/29, 48/59 |
| 5 | 60 | 74 | 60/61, 30/31, 20/21, 15/16, 12/13, 10/11, 60/67, 15/17, 20/23, 6/7, 60/71, 5/6, 60/73, 30/37 |

The embodiments of the present disclosure for FTN-DFT-S-OFDM is applicable in general to transmitting data and/or signaling/control information.

Performance of a receiver could be degraded without the availability of an accurate channel estimation. An embodiment of the disclosure may improve with the accuracy of channel estimation for FTN (e.g., FTN-DFT-S-OFDM) with two different examples of slot structures that they can support different 5G numerologies, and compatible with 4G/5G subframe/frame structure. Additionally, FTN-ISI pre-canceling techniques could be utilized to either of slot structure to remove any residual FTN-ISI impacting reference signal (RS) symbols in Tx side.

A number of consecutive OFDM symbols per slot for normal cyclic prefix is assumed to be 14 (with index of 0 to 13). The length of one OFDM Symbol (without cyclic prefix) is inverse of subcarrier spacing corresponding to numerology that is configured regardless of if it is an FTN symbol or none-FTN symbol. The embodiments of the disclosure are applicable to any block/slot based OFDM transmission (e.g., for 4G/5G extended cyclic prefix-based slot with 12 OFDM symbols).

In both slot structure examples, OFDM symbol time is unchanged compared to DFT-S-OFDM for a given numerology, and hence number of OFDM symbols per slot is also unchanged. Moreover, transmission bandwidth or equivalently number of sub-carriers are unchanged. The backward slot compatibility may help FTN-DFT-S-OFDM a waveform candidate for B5G and 6G systems.

First variant of the slot structure is "mixed-FTN-DFT-S-OFDM" in which, time divisions of FTN data symbols, none-FTN data symbols and none-FTN RS symbols are placed within a slot. Tx/UE transmits the data symbols for transmission in a slot over a channel (e.g., PUSCH), wherein FTN-data symbols is utilized for the central OFDM symbols of slot (index of 3-10), and the none-FTN-data symbols is utilized for the edge symbols in the slot (index of 0, 2, 11, and 13). Two RS symbols are located in OFDM index of 1 and 12. FIGURE 10 illustrates such slot structure.

FIGURE 10 illustrates examples of mixed-FTN-DFT-S-OFDM slot structure 1000 according to embodiments of the present disclosure. An embodiment of the mixed-FTN-DFT-S-OFDM slot structure 1000 shown in FIGURE 10 is for illustration only.

Both FTN and none-FTN data symbols may have different number of modulation symbols with same number of subcarriers. Thus, the encoded bits length may be different for FTN and none-FTN symbols if identical modulation and coding scheme is assumed among them. Symbol duration, number of OFDM symbols per slot, and number of subcarriers are unchanged compared to DFT-S-OFDM; however, number of data modulation symbols for FTN symbols are increased according to FTN compression rate. Overall slot-spectral efficiency for "mixed-FTN-DFT-S-OFDM" ( $SE_{slot}^{mixed}$ ) is calculated by the following equation based on slot-spectral efficiency of 4G/5G DFT-S-OFDM ( $SE_{slot}^{NR}$ ):

$$SE_{slot}^{mixed} = \left(\frac{3}{7} + \frac{4}{7\tau}\right) SE_{slot}^{NR}$$

Owing to the presence of two non-FTN symbols around of RS symbols, RS could be less susceptible to the ISI from FTN data symbols. "Mixed-FTN-DFT-S-OFDM" also suppresses inter-slot interreference between two slots whose may belong to same user or different users/systems by utilizing 3 + 3 none-FTN symbols as a guard (between FTN data symbols of two slots). This enables none-FTN system to coexist with FTN system (e.g., FTN-DFT-S-OFDM). The FTN-ISI within the central OFDM symbols could be equalized by FTN equalizer in Rx or/and Tx.

TABLES 2, 3, and 4 are illustrating details of exemplary "Mixed-FTN-DFT-S-OFDM" slot structures for three different FTN compression rates $\tau = \frac{12}{13}$ , $\tau = \frac{8}{9}$ and $\tau = \frac{6}{7}$ , respectively, based on processing operation 600 as illustrated in FIGURE 6.

For any RB size, FTN compression rates of $\frac{12}{13}$ and $\frac{6}{7}$ are feasible examples, satisfying Mazo limit and achieving low SE and high SE, respectively. While moderate FTN compression rate of $\frac{8}{9}$ is more suitable for any even RB sizes.

TABLES 2, 3, and 4 are visualizing two RS symbols located in 1st and 12th symbols of slot, and rest could be data symbols. However, symbols 0-2 and 11-13 including RS symbols are not exploiting FTN. It is assumed that number of subcarriers/RBs (bandwidth) for symbols of slot are equal, while number of modulation data symbols could be different whether FTN is applied or not. DFT size could be different between none-FTN symbols and FTN symbols. All three tables are representing an example of 4 RB (or equivalently *M* = 48 subcarriers are allocated for each of 14 symbols), while for $\tau = \frac{12}{13}$ (Table 2) and $\tau = \frac{6}{7}$ (Table 4) any RB size can be selected. For $\tau = \frac{8}{9}$ (Table 4), only even-sized RB could be applied. IFFT size is assumed to be 1024 for all of slot symbols.

TABLE 2 for $\tau = \frac{12}{13}$ : based on $\tau = \frac{M}{Q}$ , number of data modulation symbols for FTN symbols is $Q = 52$. While, none-FTN data symbols has 48 data symbols. Number of subcarriers, regardless of FTN, none-FTN data symbols and RS symbols are 48. With assumption of $b = \tau_{num} = 12$, DFT size equals to $b * Q = 12 * 52 = 624$ for FTN-data symbols and 48 for none-FTN data symbols.

TABLE 3 for $\tau = \frac{8}{9}$ : based on $\tau = \frac{M}{Q}$ , number of data modulation symbols for FTN symbols is $Q = 54$. While, none-FTN data symbols has 48 data symbols. Number of subcarriers, regardless of FTN, none-FTN data symbols and RS symbols are 48. With assumption of $b = \tau_{num} = 8$, DFT size equals to $b * Q = 8 * 54 = 432$ for FTN-data symbols and 48 for none-FTN data symbols.

TABLE 4 for $\tau = \frac{6}{7}$ : based on relationship of $\tau = \frac{M}{Q}$ , number of data modulation symbols for FTN symbols is $Q$ = 56. While, none-FTN data symbols has 48 data symbols. Number of subcarriers, regardless of FTN, none-FTN data symbols and RS symbols are 48. With assumption of $b = \tau_{num}$ =6, DFT size equals to $b * Q = 6 * 56 = 336$ for FTN-data symbols and 48 for none-FTN data symbols.

TABLE 2. Example of slot-structure of FTN-DFT-S-OFDM for "Mixed-FTN-DFT-S-OFDM" with $\tau$=12/13, 4RB for subcarriers are utilized

| Symbol Index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| FTN | No | No | No | Yes | Yes | Yes | Yes | Yes | Yes | Yes | Yes | No | No | No |
| Data/Reference signal (D/RS) | D | RS | D | D | D | D | D | D | D | D | D | D | RS | D |
| Num. of Mod. Symbols | 48 | - | 48 | 52 | 52 | 52 | 52 | 52 | 52 | 52 | 52 | 48 | - | 48 |
| Num. of Sub-carriers | 48 | 48 | 48 | 48 | 48 | 48 | 48 | 48 | 48 | 48 | 48 | 48 | 48 | 48 |
| DFT size | 48 | - | 48 | 624 | 624 | 624 | 624 | 624 | 624 | 624 | 624 | 48 | - | 48 |

TABLE 3. Example of slot-structure of FTN-DFT-S-OFDM for "Mixed-FTN-DFT-S-OFDM" with $\tau$=8/9, 4RB for subcarriers are utilized

| Symbol Index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| FTN | No | No | No | Yes | Yes | Yes | Yes | Yes | Yes | Yes | Yes | No | No | No |
| Data/Reference signal (D/RS) | D | RS | D | D | D | D | D | D | D | D | D | D | RS | D |
| Num. of Mod. Symbols | 48 | - | 48 | 54 | 54 | 54 | 54 | 54 | 54 | 54 | 54 | 48 | - | 48 |
| Num. of Sub-carriers | 48 | 48 | 48 | 48 | 48 | 48 | 48 | 48 | 48 | 48 | 48 | 48 | 48 | 48 |
| DFT size | 48 | - | 48 | 432 | 432 | 432 | 432 | 432 | 432 | 432 | 432 | 48 | - | 48 |

TABLE 4. Example of slot-structure of FTN-DFT-S-OFDM for "Mixed-FTN-DFT-S-OFDM" with $\tau$=6/7, 4RB for subcarriers are utilized

| Symbol Index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| FTN | No | No | No | Yes | Yes | Yes | Yes | Yes | Yes | Yes | Yes | No | No | No |
| Data/Reference signal (D/RS) | D | RS | D | D | D | D | D | D | D | D | D | D | RS | D |
| Num. of Mod. Symbols | 48 | - | 48 | 56 | 56 | 56 | 56 | 56 | 56 | 56 | 56 | 48 | - | 48 |
| Num. of Sub-carriers | 48 | 48 | 48 | 48 | 48 | 48 | 48 | 48 | 48 | 48 | 48 | 48 | 48 | 48 |
| DFT size | 48 | - | 48 | 336 | 336 | 336 | 336 | 336 | 336 | 336 | 336 | 48 | - | 48 |

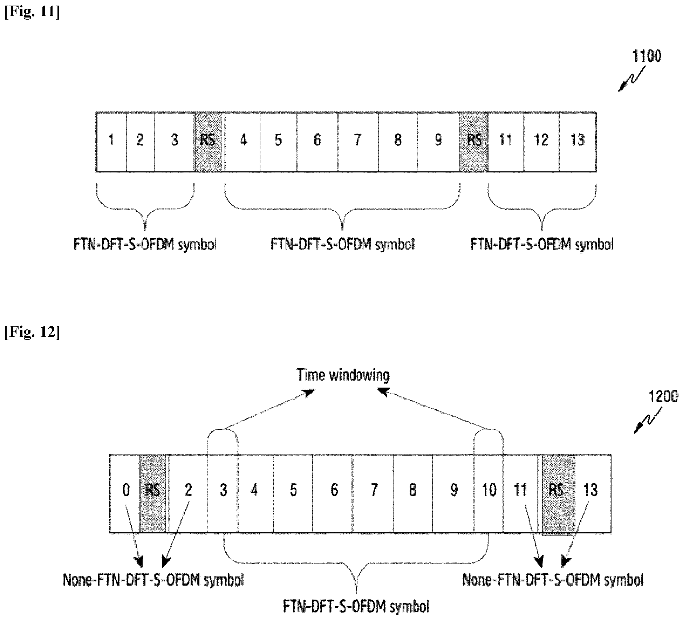

Second variant of slot structure is "all-FTN-DFT-S-OFDM" in which, is time divisions of FTN data symbols and none-FTN RS symbols within slot. The Tx/UE transmits the FTN-DFT-S-OFDM data symbols, wherein the slot includes two RS symbols in 3rd and 10th symbol, and rest of symbols (0-2; 4-9; 11-13) in the slot are transmitted in accordance with FTN-DFT-S-OFDM. Symbol duration, number of OFDM symbols per slot, and number of subcarriers are unchanged compared to DFT-S-OFDM; however, number of data modulation symbols for FTN symbols are increased according to FTN compression rate. FIGURE 11 is illustrating such slot structure.

FIGURE 11 illustrates examples of all-FTN-DFT-S-OFDM slot structure 1100 according to embodiments of the present disclosure. An embodiment of the method 1100 shown in FIGURE 11 is for illustration only.

This slot structure offers higher slot spectral-efficiency than "mixed-FTN-DFT-S-OFDM". The SE of "all-FTN-DFT-S-OFDM" can be calculated as follows based on slot-spectral efficiency of 4G/5G DFT-S-OFDM ( $SE_{slot}^{NR}$ ):

$$SE_{slot}^{all} = \left(\frac{1}{7} + \frac{6}{7\tau}\right) SE_{slot}^{NR}$$

TABLES 5, 6, and 7 are illustrating details of exemplary "all-FTN-DFT-S-OFDM" slot structures for three different

FTN compression rates $\tau = \frac{12}{13}$, $\tau = \frac{8}{9}$ and $\tau = \frac{6}{7}$, respectively, based on an embodiment of the present disclosure shown in FIGURE 6. For any RB size, FTN compression rates of $\frac{12}{13}$ and $\frac{6}{7}$ are feasible examples, satisfying Mazo limit and achieving low SE and high SE, respectively. While moderate FTN compression rate of $\frac{8}{9}$ is more suitable for any even RB sizes.

TABLES 5, 6, and 7 are showing that two RS symbols are located in 3rd and 10th symbols of slot, and rest could be data FTN symbols. RS symbols are not utilizing FTN operation. All three tables are representing an example of 4 RB (or equivalently M=48 subcarriers are allocated for each of slot symbols), while for table 5 ( $\tau = \frac{12}{13}$ ) and 7 ( $\tau = \frac{6}{7}$ ) any RB size can be selected with. For Table 6 ( $\tau = \frac{8}{9}$ ), only even-sized RB could be applied. FFT size is assumed to be 1024 for symbols of slot.

TABLE 5 for $\tau = \frac{12}{13}$: based on $\tau = \frac{M}{Q}$, number of data modulation symbols for FTN symbols is $Q$ = 52, while number of data modulation symbols for none-FTN symbols is 48. Number of subcarriers, regardless of FTN, or none-FTN data symbols and RS symbols are 4RB/48. With assumption of b = $\tau_{num}$ =12, DFT size equals to $b * Q$ = 12 * 52 = 624 for FTN-data symbols, and DFT size for none-FTN symbols is 48.

TABLE 6 for $\tau = \frac{8}{9}$: based on $\tau = \frac{M}{Q}$, number of data modulation symbols for FTN symbols is Q = 54, while number of data modulation symbols for none-FTN symbols is 48. Number of subcarriers, regardless of FTN, or none-FTN data symbols and RS symbols are 4RB/48. With assumption of $b = \tau_{num}$ =8, DFT size equals to $b * Q$ = 8 * 54 = 432 for FTN-data symbols, and DFT size for none-FTN symbols is 48.

TABLE 7 for $\tau = \frac{6}{7}$: based on $\tau = \frac{M}{Q}$, number of data modulation symbols for FTN symbols is Q = 56, while number of data modulation symbols for none-FTN symbols is 48. Number of subcarriers, regardless of FTN, or none-FTN data symbols and RS symbols are 48. With assumption of $b = \tau_{num}$ =6, DFT size equals to $b * Q$ = 6 * 56 = 336 for FTN-data symbols, and DFT size for none-FTN symbols is 48.

TABLE 5. Example of slot-structure of FTN-DFT-S-OFDM for "Mixed-FTN-DFT-S-OFDM" with $\tau$=12/13, 4RB for subcarriers are utilized

| Symbol Index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| FTN | Yes | Yes | Yes | No | Yes | Yes | Yes | Yes | Yes | Yes | No | Yes | Yes | Yes |
| Data/Reference signal (D/RS) | D | D | D | RS | D | D | D | D | D | D | RS | D | D | D |
| Num. of Mod. Symbols | 52 | 52 | 52 | - | 52 | 52 | 52 | 52 | 52 | 52 | - | 52 | 52 | 52 |
| Num. of Sub-carriers | 48 | 48 | 48 | 48 | 48 | 48 | 48 | 48 | 48 | 48 | 48 | 48 | 48 | 48 |
| DFT size | 624 | 624 | 624 | - | 624 | 624 | 624 | 624 | 624 | 624 | - | 624 | 624 | 624 |

TABLE 6. Example of slot-structure of FTN-DFT-S-OFDM for "ALL-FTN-DFT-S-OFDM" with $\tau$=8/9, 4RB for subcarriers are utilized

| Symbol Index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| FTN | Yes | Yes | Yes | No | Yes | Yes | Yes | Yes | Yes | Yes | No | Yes | Yes | Yes |
| Data/Reference signal (D/RS) | D | D | D | RS | D | D | D | D | D | D | RS | D | D | D |
| Num. of Mod. Symbols | 54 | 54 | 54 | - | 54 | 54 | 54 | 54 | 54 | 54 | - | 54 | 54 | 54 |

(continued)

| Symbol Index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| Num. of Sub-carriers | 48 | 48 | 48 | 48 | 48 | 48 | 48 | 48 | 48 | 48 | 48 | 48 | 48 | 48 |
| DFT size | 432 | 432 | 432 | - | 432 | 432 | 432 | 432 | 432 | 432 | - | 432 | 432 | 432 |

TABLE 7. Example of slot-structure of FTN-DFT-S-OFDM for "ALL-FTN-DFT-S-OFDM" with $\tau$=6/7, 4RB for subcarriers are utilized

| Symbol Index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| FTN | Yes | Yes | Yes | No | Yes | Yes | Yes | Yes | Yes | Yes | No | Yes | Yes | Yes |
| Data/Reference signal (D/RS) | D | D | D | RS | D | D | D | D | D | D | RS | D | D | D |
| Num. of Mod. Symbols | 56 | 56 | 56 | - | 56 | 56 | 56 | 56 | 56 | 56 | - | 56 | 56 | 56 |
| Num. of Sub-carriers | 48 | 48 | 48 | 48 | 48 | 48 | 48 | 48 | 48 | 48 | 48 | 48 | 48 | 48 |
| DFT size | 336 | 336 | 336 | 48 | 336 | 336 | 336 | 336 | 336 | 336 | 48 | 336 | 336 | 336 |

TABLE 8 compares SE of slot examples for different FTN compression rates. As it can be seen, the SE of "all-FTN-DFT-S-OFDM" slot is higher than "mixed-FTN-DFT-S-OFDM" for given FTN compression rate. Additionally, with reducing FTN compression rate, the SE is increasing.

TABLE 8. SE Improvement compared to DFT-S-OFDM per Slot structure and per FTN compression Rate

| FTN compression rate | 12/13 | 8/9 | 6/7 |
|---|---|---|---|
| Mixed-FTN-DFT-OFDM | 4.7% | 7.1% | 9.5% |
| All-FTN-DFT-OFDM | 7.1% | 10.7% | 14.2% |

Additional Tx side operations may enhance the channel estimation accuracy for FTN based slot structures (e.g., "all-FTN-DFT-S-OFDM" and "mixed-FTN-DFT-S-OFDM"). Two of such operations can be summarized as follows that can be utilized individually or together.

Time windowing on immediate FTN OFDM symbols (relative to RS symbols) may mitigate impact of FTN-ISI. This operation could add soft edges to adjacent FTN-OFDM symbol with RS symbols. The shape of the window (or edge) in time domain determines the FDSS (as explained in an embodiment - FIGURE 6) with different tradeoffs between the width of the main lobe and suppression of the side lobes. With time-windowing (or equivalently FDSS) on some of FTN-symbols, FTN-ISI can be surpassed for RS symbols.

For instance, for "mixed-FTN-DFT-S-OFDM" slot structure, 3$^{rd}$ and 10$^{th}$ symbols (FTN) could be time windowed as illustrated in FIGURE 12. This can reduce inter-slot interference further. Another variation of this example could be applying time-windowing on none-FTN symbols of second and 11$^{th}$ leading to limit any residual FTN (e.g., from symbol 3-10).

FIGURE 12 illustrates examples of time-windowing of edge FTN symbols 1200 with index 3 and 10 for mixed-FTN-DFT-S-OFDM slot structure according to embodiments of the present disclosure. An embodiment of the time-windowing of edge FTN symbols 1200 shown in FIGURE 12 is for illustration only.

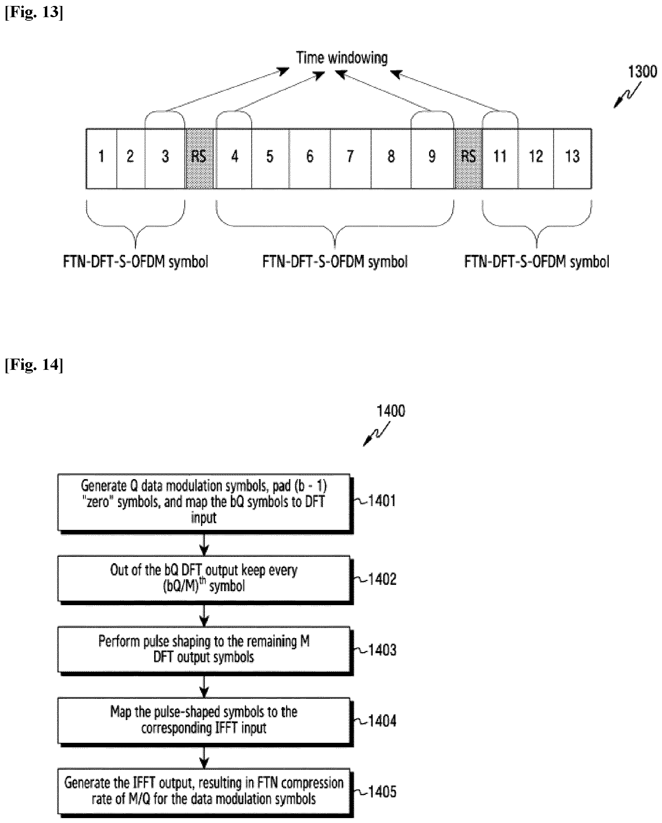

For "all-FTN-DFT-S-OFDM" slot structure example, 2$^{nd}$, 4$^{th}$, 9$^{th}$, and 11$^{th}$ FTN symbols of slot could be time windowed as illustrated in FIGURE 13.

FIGURE 13 illustrates examples of time-windowing of adjacent FTN symbols 1300 with index 2, 4, 9 and 11 for all-FTN-DFT-S-OFDM slot structure according to embodiments of the present disclosure. An embodiment of the time-windowing of adjacent FTN symbols 1300 shown in FIGURE 13 is for illustration only.

TX may cancel any incurred FTN-ISI on RS symbols by pre-equalizing RS symbols. RS symbols are intentionally varied from the original values; but as RS symbols are none-FTN symbols, the overall received RS symbols by Rx could be FTN-ISI free. Received symbols may be noisy and with channel-induced ISI version of original RS symbols. As the main ISI component in the observations, is estimated and equalized using the classical channel estimation techniques. The pre-coded/equalized RS symbols are generated based on set of FTN symbols by performing a matrix operation with a pre-equalization matrix that is dependent on FDSS utilized for FTN symbols, FTN compression rate and relative distance of FTN symbols with RS symbols.

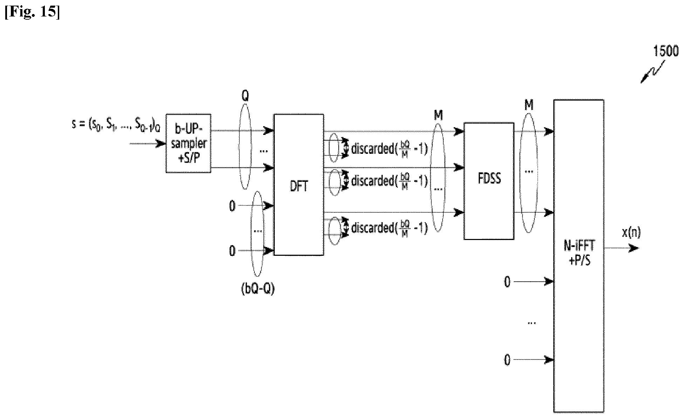

Second variation of the embodiment is based on zero padding operation is drawn in FIGURE 14 and an example of corresponding signal processing bock diagram is shown in FIGURE 15. Compared to first embodiment, operations of 601 and 602 are modified.

FIGURE 14 illustrates a flowchart of a method 1400 for variation of FTN-DFT-S-OFDM to generate FTN based DFT-S-OFDM based on zero padding operation according to embodiments of the present disclosure. The method 1400 as may be performed by a UE (e.g., 111-116 as illustrated in FIGURE 1). An embodiment of the method 1400 shown in FIGURE 14 is for illustration only. One or more of the components illustrated in FIGURE 14 can be implemented in specialized circuitry configured to perform the noted functions or one or more of the components can be implemented by one or more processors executing instructions to perform the noted functions.

FIGURE 15 illustrates examples of variation of Tx architecture of FTN-DFT-S-OFDM 1500 based on zero padding operation according to embodiments of the present disclosure. An embodiment of the variation of Tx architecture of FTN-DFT-S-OFDM 1500 shown in FIGURE 15 is for illustration only.

The $Q$ modulation data symbols are appended (padded) with $(b - 1)Q$ zeros, and the $bQ$ symbols are DFT spread at operation 1401.

At operation 1402, the DFT outputs are down-sampled by the factor of $\frac{bQ}{M}$ and $M$ symbols are passed to the FDSS.

At operation 1403, the frequency domain spectrum shaping can be applied on the M DFT outputs and can be mapped to the sub-carriers corresponding to the assigned transmission bandwidth as an input of IFFT.

At operation 1404, based on the resultant M FDSS output, IFFT is generating FTN signal with compression rate of $\frac{M}{Q}$.

A UE (e.g., 111-116 as illustrated in FIGURE 1) may up-sample or zero-pad the data modulation symbols to generate FTN based DFT-S-OFDM signal.

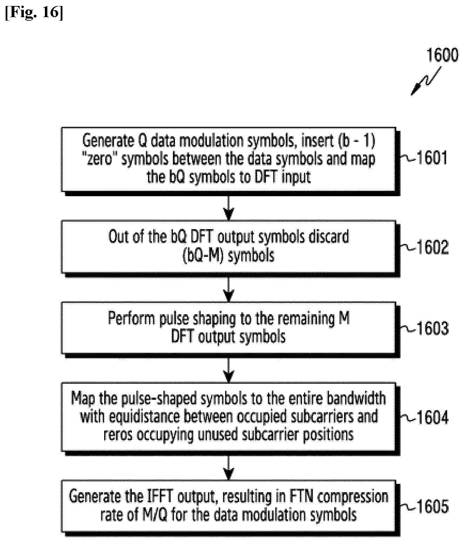

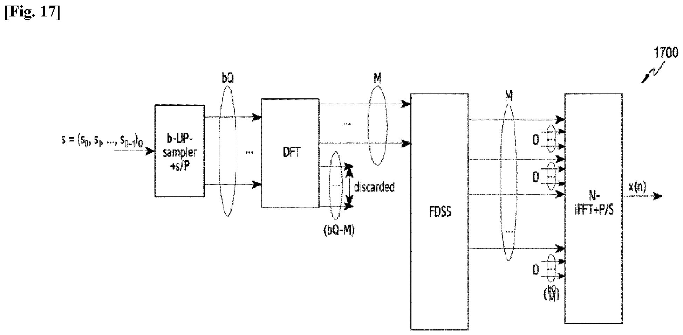

Third variation of the embodiment is based on distributed subcarrier mapping and its operations and block diagram are shown in FIGURE 16 and FIGURE 17, respectively. Compared to first embodiment, operation 1404 is modified.

FIGURE 16 illustrates a flowchart of a method 1600 for variation of FTN-DFT-S-OFDM to generate FTN based DFT-S-OFDM based on distributed subcarrier mapping according to embodiments of the present disclosure. The method 1600 as may be performed by a UE (e.g., 111-116 as illustrated in FIGURE 1). An embodiment of the method 1600 shown in FIGURE 16 is for illustration only. One or more of the components illustrated in FIGURE 16 can be implemented in specialized circuitry configured to perform the noted functions or one or more of the components can be implemented by one or more processors executing instructions to perform the noted functions.

FIGURE 17 illustrates examples of variation of Tx architecture of FTN-DFT-S-OFDM 1700 based on distributed subcarrier mapping according to embodiments of the present disclosure. An embodiment of the variation of Tx architecture of FTN-DFT-S-OFDM 1700 shown in FIGURE 17 is for illustration only.

The $M$ DFT outputs are allocated over the entire bandwidth with equidistance between occupied sub-carriers (every $(N/M)^{th}$ subcarriers /IFFT input) and zeros occupying unused subcarrier positions. The number of subcarriers of Tx/UE ($M$) could be assumed to be divisor of the number of the overall available subcarriers ($N$). Where the ratio of $BW_{exp} = \frac{N}{M}$, is the bandwidth expansion factor.

At the transmitter, at operation 1604, each data symbol is spread over the allocated subcarriers which are scattered over the entire spectrum.

Output of IFFT can be modeled as single carrier transmission with time-domain compressed pulse shape of DFT-S-OFDM $g(n)$ with ratio of $1/BW_{exp}$ and symbols are sent every $\frac{M}{bQ}$ samples, as follows:

$$x(n) = \frac{1}{bQ} \sum_{q=0}^{Q-1} s_q \cdot g\left(BW_{exp}\left(n - q\frac{M}{bQ}\right)\right) \quad \text{where} \quad g(n) = \sum_{k=0}^{M-1} e^{jn\frac{2\pi k}{N}}$$

Time symbols out of the IFFT are FTN version of a repetition of the original symbols into the DFT with a scaling factor of $1/BW_{exp}$ and some possible phase rotation, leading to FTN compression rate of $\frac{M}{Q}$.

Fourth variation of the embodiment is selecting any $M$ consecutive DFT outputs (rather than first $M$ DFT output) at operation 602. This may truncate different part of data spectrum and may impact on SER and PAPR levels. Compared to first embodiment, operation 602 is modified.

Fifth variation of the embodiment is based on subcarrier mapping and selecting different consecutive $M$ inputs of IFFT (rather than first $M$ inputs of IFFT) with zeros occupying unused subcarrier positions, which may cause some possible phase rotation on output signal. Compared to first embodiment, operation 604 is modified.

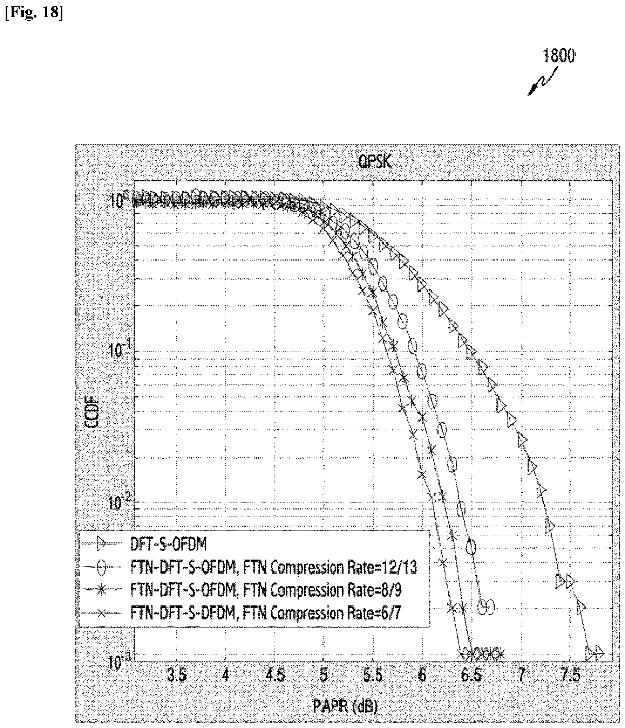

Instantaneous PAPR complementary cumulative distribution functions (CCDF) of FTN-DFT-S-OFDM (for $\tau = \frac{12}{13}, \frac{8}{9}, \frac{6}{7}$) and DFT-s-OFDM without any FDSS is shown in FIGURE 18 (under QPSK modulation when 6 RB is utilized). FTN-DFT-S-OFDM, for FTN compression rates of $\frac{12}{13}, \frac{8}{9}$ and $\frac{6}{7}$ achieves about 1 dB, 1.25dB and 1.5dB PAPR gains respectively compared with DFT-s-OFDM at $10^{-3}$ CCDF level.

FIGURE 18 illustrates an example of instantaneous PAPR CCDFs 1800 for QPSK/6RB without FDSS for FTN-DFT-S-OFDM and DFT-S-OFDM according to embodiments of the present disclosure. An embodiment of the instantaneous PAPR CCDFs 1800 shown in FIGURE 18 is for illustration only.

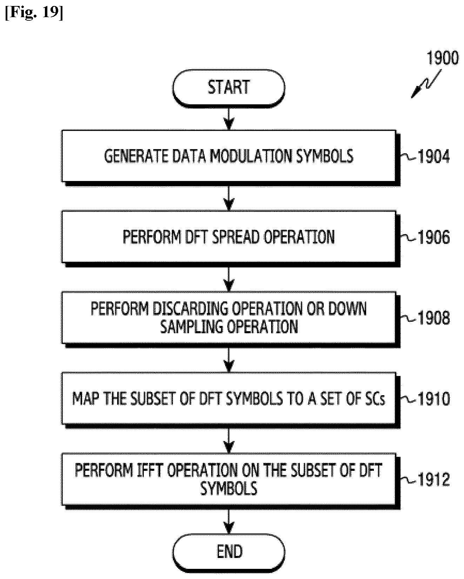

FIGURE 19 illustrates a flowchart of a method 1900 for according to embodiments of the present disclosure. The method 1100 as may be performed by a UE (e.g., 111-116 as illustrated in FIGURE 1). An embodiment of the method 1900 shown in FIGURE 19 is for illustration only. One or more of the components illustrated in FIGURE 19 can be implemented in specialized circuitry configured to perform the noted functions or one or more of the components can be implemented by one or more processors executing instructions to perform the noted functions.

As illustrated in FIGURE 19, the method 1900 begins at step 1904. In step 1904, the UE generates data modulation symbols including a set of zero symbols, wherein the data modulation symbols are up-sampled or zero-padded.

In step 1906, the UE performs, to obtain DFT output signal, a DFT spread operation on the up-sampled data modulation symbols or the zero-padded data modulation symbols.

In step 1908, the UE performs, based on (i) a target FTN compression rate and (ii) a SC allocation, a discarding operation or a down sampling operation on the DFT output signal, wherein the discarding operation or the down sampling operation generates a subset of DFT symbols.

In step 1910, the UE maps the subset of DFT symbols to a set of SCs corresponding to a transmission bandwidth.

In step 1912, the UE performs an IFFT operation on the subset of DFT symbols to obtain an FTN-DFT-S-OFDM signal, wherein the FTN-DFT-S-OFDM signal includes the target FTN compression rate comprising a positive rational number smaller than one.

In one embodiment, the FTN-DFT-S-OFDM signal includes an OFDM symbol time, a number of sub-carriers, and a number of OFDM symbols per slot; the FTN-DFT-S-OFDM signal is transmitted or received over a mixed-FTN-DFT-S-OFDM slot that includes time divisions of FTN data symbols, none-FTN data symbols, and none-FTN reference signal (RS) symbols that are placed within a slot; and the FTN-DFT-S-OFDM signal is transmitted or received over an all-FTN-DFT-S-OFDM slot that includes the time divisions of FTN data symbols and none-FTN RS symbols that are placed within the slot.

In one embodiment, the UE performs an FDSS operation on the subset of DFT symbols.

In one embodiment, the UE spreads each of the data modulation symbols over the set of subcarriers that is scattered over an entire spectrum.

In one embodiment, the UE spreads the data modulation symbols using the DFT spread operation and obtain consecutive DFT output signals.

In one embodiment, the UE spreads the data modulation symbols using the DFT spread operation and obtain different consecutive DFT output signals and performs the IFFT operation to the different consecutive DFT output signals to obtain the FTN-DFT-S-OFDM signal, the IFFT operation including a set of zeros occupying unused subcarrier positions.

In one embodiment, the UE enables an FTN-ISI pre-canceling operation using a time windowing operation or a pre-equalization/pre-coding of RS symbols; and adds soft edges to adjacent FTN-OFDM symbols with the RS symbols for the time windowing operation.

In one embodiment, the UE calculates the FTN compression rate based on a number of DFT output signals and a maximum number of symbols for the FTN-DFT-S-OFDM signal.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

**Claims**

1. A method performed by a user equipment (UE) in a wireless communication system, the method comprising:

   transmitting UE capability information indicating the UE is capable of supporting a faster-than-Nyquist (FTN);
   generating data modulation symbols including a set of zero symbols, wherein the data modulation symbols are up-sampled or zero-padded;
   performing, to obtain DFT output signal, a discrete Fourier transform (DFT) spread operation on the up-sampled data modulation symbols or the zero-padded data modulation symbols;
   performing, based on a target FTN compression rate and a subcarrier (SC) allocation, a discarding operation or a down sampling operation on the DFT output signal, wherein the discarding operation or the down sampling operation generates a subset of DFT symbols;
   mapping the subset of DFT symbols to a set of SCs corresponding to a transmission bandwidth; and
   performing an inverse fast Fourier transform (IFFT) operation on the subset of DFT symbols to obtain an FTN-DFT spread orthogonal frequency division multiplexing (FTN-DFT-S-OFDM) signal, wherein the FTN-DFT-S-OFDM signal includes the target FTN compression rate comprising a positive rational number smaller than one.

2. The method of Claim 1, further comprising performing a frequency domain spectrum shaping (FDSS) operation on the subset of DFT symbols.

3. The method of Claim 1, further comprising spreading each of the data modulation symbols over the set of subcarriers that is scattered over an entire spectrum.

4. The method of Claim 1, further comprising spreading the data modulation symbols using the DFT spread operation and obtain consecutive DFT output signals.

5. The method of Claim 9, further comprising:

   spreading the data modulation symbols using the DFT spread operation and obtain different consecutive DFT output signals; and
   performing the IFFT operation to the different consecutive DFT output signals to obtain the FTN-DFT-S-OFDM signal, the IFFT operation including a set of zeros occupying unused subcarrier positions.

6. The method of Claim 1, wherein:

   the FTN-DFT-S-OFDM signal includes an OFDM symbol time, a number of sub-carriers, and a number of OFDM symbols per slot;
   the FTN-DFT-S-OFDM signal is transmitted or received over a mixed-FTN-DFT-S-OFDM slot that includes time divisions of FTN data symbols, none-FTN data symbols, and none-FTN reference signal (RS) symbols that are placed within a slot; and
   the FTN-DFT-S-OFDM signal is transmitted or received over an all-FTN-DFT-S-OFDM slot that includes the time divisions of FTN data symbols and none-FTN RS symbols that are placed within the slot.

7. The method of Claim 1, further comprising:

   enabling an FTN-inter-symbol interference (FTN-ISI) pre-canceling operation using a time windowing operation or a pre-equalization/pre-coding of reference signal (RS) symbols; and
   adding soft edges to adjacent FTN-OFDM symbols with the RS symbols for the time windowing operation.

8. The method of Claim 1, further comprising calculating the FTN compression rate based on a number of DFT output signals and a maximum number of symbols for the FTN-DFT-S-OFDM signal.

9. A method performed by a base station (BS) in a wireless communication system, the method comprising:

receiving, from a user equipment (UE), UE capability information indicating the UE is capable of supporting a faster-than-Nyquist (FTN),

wherein:

data modulation symbols including a set of zero symbols is generated, the data modulation symbols being up-sampled or zero-padded,

a discrete Fourier transform (DFT) spread operation is performed to obtain DFT output signal on the up-sampled data modulation symbols or the zero-padded data modulation symbols,

based on (i) a target faster-than-Nyquist (FTN) compression rate and (ii) a subcarrier (SC) allocation, a discarding operation or a down sampling operation is performed on the DFT output signal, the discarding operation or the down sampling operation generating a subset of DFT symbols,

the subset of DFT symbols is mapped to a set of SCs corresponding to a transmission bandwidth, and

an inverse fast Fourier transform (IFFT) operation is performed on the subset of DFT symbols to obtain an FTN-DFT spread orthogonal frequency division multiplexing (FTN-DFT-S-OFDM) signal, wherein the FTN-DFT-S-OFDM signal including the target FTN compression rate comprising a positive rational number smaller than one.

10. The method of Claim 9, wherein a frequency domain spectrum shaping (FDSS) operation is performed on the subset of DFT symbols.

11. The method of Claim 9, wherein:

each of the data modulation symbols is spread over the set of subcarriers that is scattered over an entire spectrum; or

the data modulation symbols using the DFT spread operation is spread to obtain consecutive DFT output signals.

12. The method of Claim 9, wherein:

the FTN-DFT-S-OFDM signal includes an OFDM symbol time, a number of sub-carriers, and a number of OFDM symbols per slot;

the FTN-DFT-S-OFDM signal is transmitted or received over a mixed-FTN-DFT-S-OFDM slot that includes time divisions of FTN data symbols, none-FTN data symbols, and none-FTN reference signal (RS) symbols that are placed within a slot; and

the FTN-DFT-S-OFDM signal is transmitted or received over an all-FTN-DFT-S-OFDM slot that includes the time divisions of FTN data symbols and none-FTN RS symbols that are placed within the slot.

13. A user equipment (UE) in a wireless communication system, the UE comprising:

a transceiver; and

a controller coupled to the transceiver, and configured to perform any one of the methods of claims 1 to 8.

14. A base station (BS) in a wireless communication system, the BS comprising:

a transceiver; and

a controller coupled to the transceiver, and configured to perform any one of the methods of claims 9 to 12.

[Fig. 1]

[Fig. 2]

[Fig. 3]

[Fig. 4]

400

| | 405 | | 410 | | 415 | | 420 | | 425 | | 430 | |
|---|---|---|---|---|---|---|---|---|---|---|---|---|
| Data In → | Channel Coding & Mod. | → | S-to-P | → | Size N IFFT | → | P-to-S | → | Add Cyclic Prefix | → | UC | → To Channel |

[Fig. 5]

500

| | 555 | | 560 | | 565 | | 570 | | 575 | | 580 | |
|---|---|---|---|---|---|---|---|---|---|---|---|---|
| From Channel → | DC | → | Remove Cyclic Prefix | → | S-to-P | → | Size N FFT | → | P-to-S | → | Channel Decod. & Demod. | → Data Out |

[Fig. 6]

600

| Generate Q data modulation symbols, insert (b - 1) "zero" symbols between the data symbols and map bQ symbols to DFT input | ~ 601 |

↓

| Out of the bQ DFT output symbols discard (bQ - M) symbols | ~ 602 |

↓

| Perform pulse shaping to the remaining M DFT output symbols | ~ 603 |

↓

| Map the pulse-shaped symbols to the corresponding IFFT input | ~ 604 |

↓

| Generate the IFFT output, resulting in FTN compression rate of M/Q for the data modulation symbols | ~ 605 |

[Fig. 7]

700

[Fig. 8]

800

[Fig. 9]

[Fig. 10]

[Fig. 11]

[Fig. 12]

[Fig. 13]

Time windowing

1300

| 1 | 2 | 3 | RS | 4 | 5 | 6 | 7 | 8 | 9 | RS | 11 | 12 | 13 |

FTN-DFT-S-OFDM symbol     FTN-DFT-S-OFDM symbol     FTN-DFT-S-OFDM symbol

[Fig. 14]

1400

Generate Q data modulation symbols, pad (b - 1) "zero" symbols, and map the bQ symbols to DFT input ~1401

Out of the bQ DFT output keep every $(bQ/M)^{th}$ symbol ~1402

Perform pulse shaping to the remaining M DFT output symbols ~1403

Map the pulse-shaped symbols to the corresponding IFFT input ~1404

Generate the IFFT output, resulting in FTN compression rate of M/Q for the data modulation symbols ~1405

[Fig. 15]

[Fig. 16]

1600

Generate Q data modulation symbols, insert (b - 1) "zero" symbols between the data symbols and map the bQ symbols to DFT input ~1601

Out of the bQ DFT output symbols discard (bQ-M) symbols ~1602

Perform pulse shaping to the remaining M DFT output symbols ~1603

Map the pulse-shaped symbols to the entire bandwidth with equidistance between occupied subcarriers and reros occupying unused subcarrier positions ~1604

Generate the IFFT output, resulting in FTN compression rate of M/Q for the data modulation symbols ~1605

[Fig. 17]

[Fig. 18]

1800

[Fig. 19]

1900

```
                    ┌─────────────┐
                    │    START    │
                    └──────┬──────┘
                           ▼
        ┌──────────────────────────────────────┐
        │   GENERATE DATA MODULATION SYMBOLS    │──1904
        └──────────────────┬───────────────────┘
                           ▼
        ┌──────────────────────────────────────┐
        │     PERFORM DFT SPREAD OPERATION      │──1906
        └──────────────────┬───────────────────┘
                           ▼
        ┌──────────────────────────────────────┐
        │  PERFORM DISCARDING OPERATION OR DOWN │──1908
        │           SAMPLING OPERATION          │
        └──────────────────┬───────────────────┘
                           ▼
        ┌──────────────────────────────────────┐
        │ MAP THE SUBSET OF DFT SYMBOLS TO A SET OF SCs │──1910
        └──────────────────┬───────────────────┘
                           ▼
        ┌──────────────────────────────────────┐
        │ PERFORM IFFT OPERATION ON THE SUBSET OF DFT │──1912
        │                SYMBOLS                 │
        └──────────────────┬───────────────────┘
                           ▼
                    ┌─────────────┐
                    │     END     │
                    └─────────────┘
```

Europäisches
Patentamt

European
Patent Office

Office européen
des brevets

# EUROPEAN SEARCH REPORT

Application Number

EP 24 17 7213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU JUAN ET AL: "Unified Non-Orthogonal Waveform (uNOW) based on DFT-s-OFDM Enhancement for 5G Evolution and 6G", 2022 IEEE 33RD ANNUAL INTERNATIONAL SYMPOSIUM ON PERSONAL, INDOOR AND MOBILE RADIO COMMUNICATIONS (PIMRC), IEEE, 12 September 2022 (2022-09-12), pages 217-222, XP034251048, DOI: 10.1109/PIMRC54779.2022.9978001 [retrieved on 2022-12-20] * section II.B * * figure 2 * | 1-14 | INV. H04L27/26 H04L25/03 H04L25/06 |
| X | WO 2023/015450 A1 (NTT DOCOMO INC [JP]) 16 February 2023 (2023-02-16) * figures 2,4,6,8 * | 1-14 | |
| E | -& US 2024/243960 A1 (LIU JUAN [JP] ET AL) 18 July 2024 (2024-07-18) * figures 2,4,6,8 * | 1-14 | |
| A | US 2022/286330 A1 (HARADA HIROKI [JP] ET AL) 8 September 2022 (2022-09-08) * figures 4,9 * * paragraphs [0117], [0123], [0134], [0140], [0150] * | 1-14 | **TECHNICAL FIELDS SEARCHED (IPC)** H04L |

The present search report has been drawn up for all claims

| Place of search | Date of completion of the search | Examiner |
|---|---|---|
| Berlin | 11 November 2024 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 7213

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2024

| Patent document cited in search report | Publication date | Patent family member(s) | | Publication date |
|---|---|---|---|---|
| WO 2023015450 A1 | 16-02-2023 | CN | 117643024 A | 01-03-2024 |
| | | US | 2024243960 A1 | 18-07-2024 |
| | | WO | 2023015450 A1 | 16-02-2023 |
| US 2024243960 A1 | 18-07-2024 | CN | 117643024 A | 01-03-2024 |
| | | US | 2024243960 A1 | 18-07-2024 |
| | | WO | 2023015450 A1 | 16-02-2023 |
| US 2022286330 A1 | 08-09-2022 | US | 2022286330 A1 | 08-09-2022 |
| | | US | 2023291621 A1 | 14-09-2023 |
| | | WO | 2021009919 A1 | 21-01-2021 |

EPO FORM P0459

For more details about this annex : see Official Journal of the European Patent Office, No. 12/82